# EUROPEAN PATENT APPLICATION

(11) **EP 1 619 145 A1**
(43) Date of publication of application: **25.01.2006**
(21) Application number: 05106631.4
(22) Date of filing: 20.07.2005
(51) Int. Cl.: B65G 43/08, B65G 15/14

(54) **Machine with conveyor belts for cardboard boxes provided with a belt stop device in absence of boxes**

(30) Priority: 23.07.2004 IT MI20041498
(71) Applicant: Marchetti, Antonio, 20142 Milano (IT)
(72) Inventor: Marchetti, Antonio, 20142 Milano (IT)
(74) Representative: Mittler, Enrico

(57) **Abstract**

A machine with conveyor belts (17) for cardboard boxes (18) is provided with a device (32) for the time control of the movement of the belts (17) which, in the absence of boxes (18), automatically stops the movement of the belts (17) after a pre-set time. The aforesaid device (32) comprises a photoelectric cell (19) located at the entrance of the machine, a switch (20) for the control of the power supply to motorization means (4) of the belts (17) and a timer (21) which in the case of detection of the absence of box by said sensitive means (19) controls after a pre-set time said switch (20) to set itself in a state of interruption of the power supply to said motorization means (4).

## Description

The present invention concerns a machine with conveyor belts for cardboard boxes provided with a device for the stop of the belts in the absence of boxes.

There are known machines for closing and sealing cardboard boxes, which comprise conveyor belts for the movement of the boxes along a bearing surface.

The belts for moving the boxes are usually two for each machine and they are moved, in continuous, by an appropriate ratio-motor unit.

Equally generally, the conveyor belts are always in operation, also in the moments in which there is no passage of boxes on the bearing surface.

This determines problems with wear of the components in motion and with safety of the utilisation of the machine against possible work accidents.

Object of the present invention is now to provide a machine of the aforesaid type with a device capable to stop the movement of the conveyor belts in the absence of boxes.

According to the invention such object is attained by a machine with conveyor belts for cardboard boxes, characterised in that it is provided with a device for the time control of the movement of the belts which, in the absence of boxes, automatically stops the movement of the belts after a pre-set time.

In this way the wear of the various components in motion is reduced and the degree of safety of the machine is increased.

The characteristics and the advantages of the present invention will become evident from the following detailed description of an embodiment thereof which is illustrated as a non-limiting example in the encolsed drawings, in which:
Figure 1 shows a longitudinal section of a machine with conveyor belts for cardboard boxes made according to the present invention;
Figure 2 shows a cross-section of the same machine according to the line II-II of Figure 1;
Figure 3 shows top plan view of the aforesaid machine;
Figure 4 shows a simplified block diagram of the device for the control of the movement and the stop of the belts.

The machine shown in the drawings comprises a frame 1 which supports a succession of idle rollers 31 which form a bearing surface for cardboard boxes 18. In addition the frame 1 supports, by means of a coupling support 2, a motor unit 3.

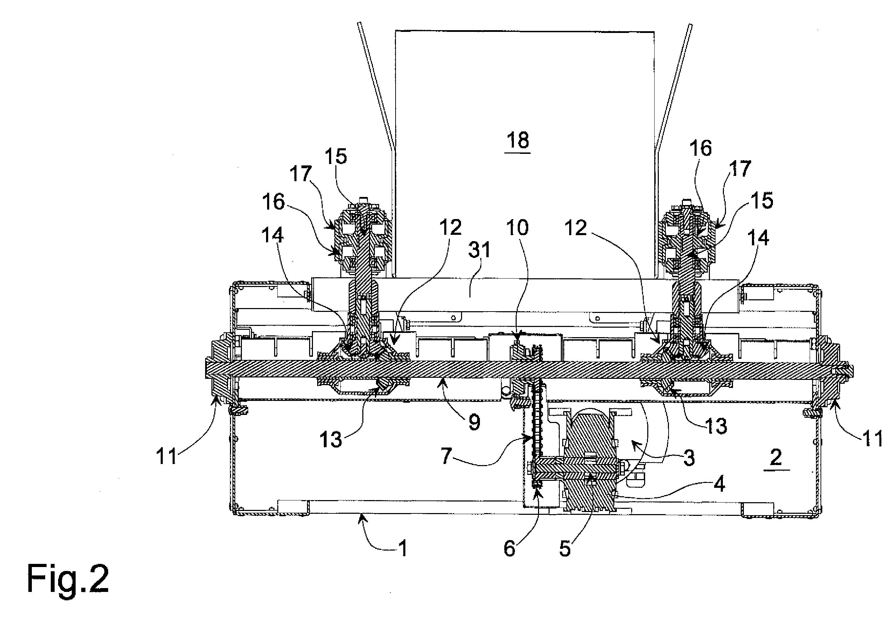

The motor unit 3 comprises a ratio-motor 4 which controls a reduction shaft 5 on which a driving pinion 6 is fastened which moves a chain 7 tightened between said driving pinion 6 and a second pinion 8 supported by a bearing 10 and fastened on a splined transversal shaft 9 in median position between the two sides of the frame 1 (Figure 2).

Ball bearings 11 are bound to the frame 1 and support the transversal splined shaft 9, onto which two transmission units 12 are engaged in sliding way comprising a horizontal conical pinion 13 and a vertical conical pinion 14 which allow the transmission of the rotary motion of the transversal shaft 9 to vertical shafts 15, which by means of pulleys 16 fastened to them move belts 17 which move the boxes 18 on the bearing surface defined by the idle rollers 31.

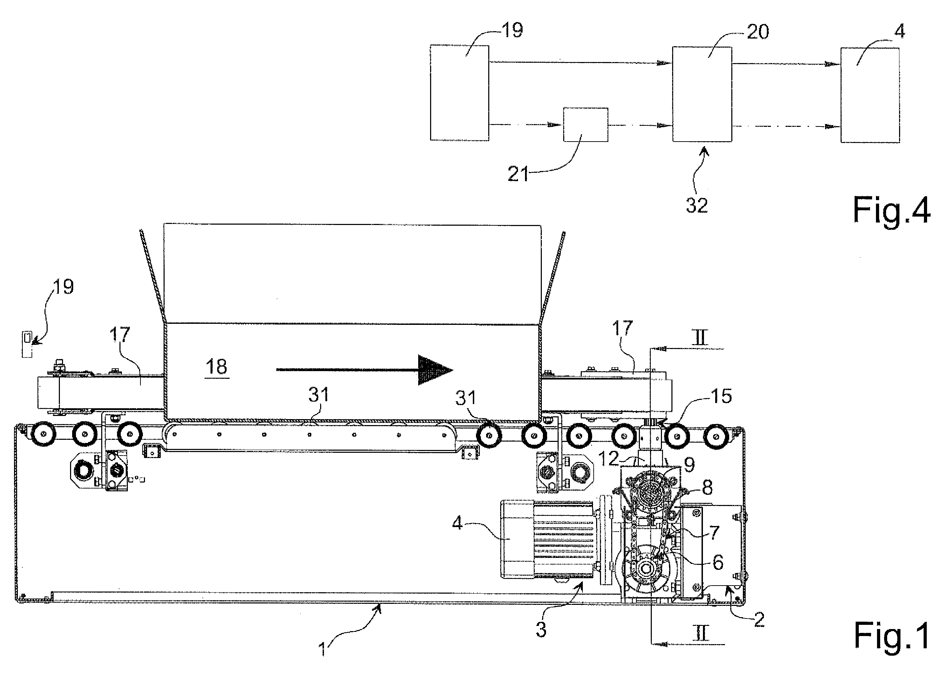

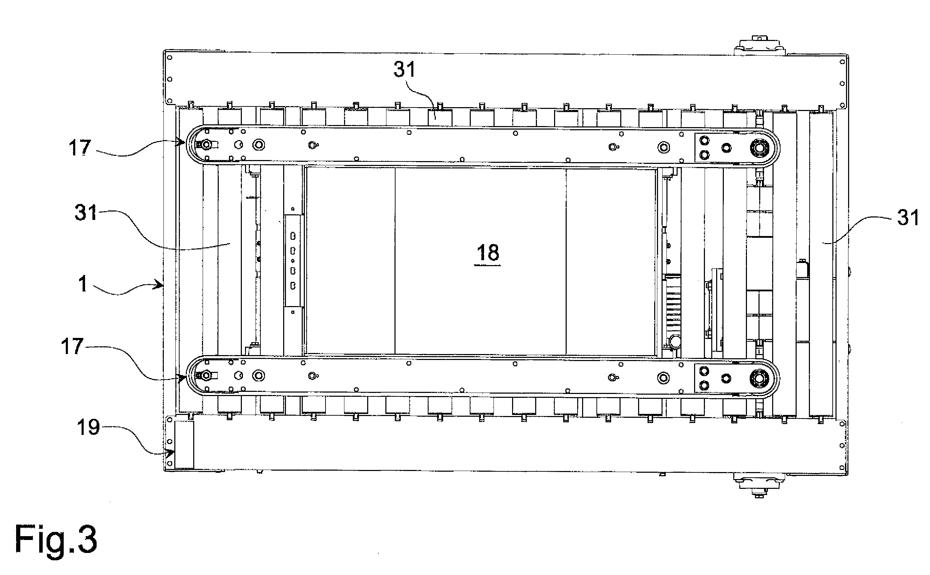

A device 32 for the movement and stop of the belts 17 is provided, whose block diagram is shown in Figure 4 and comprises a photoelectric cell 19 located at the entrance of the machine (Figures 1 and 3) in order to detect the arrival of a box. The photoelectric cell 19 controls a remote control switch 20, which controls in turn the power supply of the ratio-motor unit 4.

When a box 18 interrupts the photoelectric cell 19, the latter signals the passage of the box to the remote control switch 20, which then controls the power supply of the ratio-motor unit 4, which puts into motion the reduction shaft 5 which, in virtue of the transmission comprising the pinions 6 and 8 and the chain 7, makes the transversal splined shaft 9 to rotate.

The transmission units 12 allow to transmit the rotary motion from the transversal shaft 9 to the vertical shafts 15 thanks to the gearing between the horizontal conical pinion 13 and the vertical conical pinion 14.

The pulleys 16 fastened on the vertical shafts 15 transmit the motion to the vertical belts 17 which move with perfect synchrony, thus guaranteeing to the box 18 an effective and risk-free movement.

Once completely transited, the box 18 lets the photoelectric cell 19 free, which signals the event to a timer 21 (Figure 4), which starts the counting of a pre-set time from this moment.

Once said time has elapsed the remote control switch 20 is controlled to remove the power supply to the ratio-motor unit 4 and consequently the conveyor belts 17 stop.

As the next box approaches the cycle starts again as described above.

## Claims

1. Machine with conveyor belts (17) for cardboard boxes (18),
**characterised in that** it is provided with a device (32) for the time control of the movement of the belts (17) which, in the absence of boxes (18), automatically stops the movement of the belts (17) after a pre-set time.

2. Machine according to claim 1, **characterised in that** said device (32) comprises means (19) sensitive to the passage of a box (18), a switch (20) for the control of the power supply to motorization means (4) of the belts (17) and a timer (21) which in the case of detection of the absence of box by said sensitive means (19) controls after a pre-set time said switch (20) to put itself in a state of interruption of the power supply to said motorization means (4).

3. Machine according to claim 2, **characterised in that** said sensitive means (19) are made up of a photoelectric cell (19) located at the entrance of the machine.
